# FASCICULE DE BREVET EUROPEEN

(11) **EP 3 269 643 B1**
(45) Date de publication et mention de la délivrance du brevet: **03.04.2019**
(21) Numéro de dépôt: 17178455.6
(22) Date de dépôt: 28.06.2017
(51) Int. Cl.: B64D 11/06

(54) **STRAPONTIN, ET VEHICULE MUNI DE CE STRAPONTIN**
KLAPPSITZ UND MIT DIESEM KLAPPSITZ AUSGESTATTETES FAHRZEUG
JUMP SEAT, AND VEHICLE PROVIDED WITH SAID JUMP SEAT

(30) Priorité: 11.07.2016 FR 1601076
(43) Date de publication de la demande: 17.01.2018
(73) Titulaire: Airbus Helicopters, 13725 Marignane Cedex (FR)
(72) Inventeur: JOFFRE, Jean-François, 13500 Martigues (FR)
(74) Mandataire: GPI & Associés

(56) Documents cités:
- US-A1- 2014 319 275

## Description

La présente invention concerne un strapontin, et un véhicule muni de ce strapontin. En particulier, le véhicule peut être un aéronef, et éventuellement un aéronef de type giravion.

Par exemple, un aéronef peut comprendre un strapontin utilisé par un membre d'équipage. Un strapontin peut parfois être agencé entre un cockpit accueillant un pilote, et une cabine accueillant des passagers.

Pour mémoire, un strapontin est un siège à abattant permettant d'accroître le nombre de places assises de manière temporaire en laissant l'espace libre à d'autres moments.

Un tel strapontin comprend une assise mobile permettant de minimiser l'encombrement du strapontin en l'absence d'un individu. Cette assise peut ainsi être déplacée d'une unique position dite par commodité « position assise » vers une position dite « position escamotée ». L'assise est ainsi positionnée dans la position assise pour permettre à un individu de s'assoir, et dans la position escamotée pour réduire l'encombrement du strapontin.

Certains strapontins ne sont pas compatibles avec des règlements de certification exigeants, notamment en termes de résistance suite à un crash.

D'autres strapontins ne sont pas ergonomiques en présentant une cinématique compliquée pour déplacer le strapontin de la position escamotée à la position assise, et inversement.

Les documents EP 0170116 et US 4740030 décrivent un strapontin qui est muni d'un dossier et d'une assise. De plus, le strapontin comporte une monture fixée à une paroi d'un véhicule.

La monture comprend un bras vertical et un bras horizontal.

L'assise est mobile en rotation par rapport au dossier entre une position horizontale déployée et une position verticale escamotée. Un premier ressort tend à positionner l'assise dans la position verticale escamotée.

De plus, le dossier est articulé au bras vertical de la monture. Ce dossier et l'assise sont alors conjointement mobiles en rotation entre une position d'utilisation et une position de rangement tendant à disposer l'assise contre la paroi. Un second ressort tend à placer le dossier et l'assise dans la position de rangement.

Pour déployer le strapontin, l'assise et le dossier sont alors déplacés dans la position d'utilisation par le biais d'une rotation à 90 degrés par rapport à la paroi. Ensuite, l'assise est déplacée de sa position verticale escamotée vers sa position horizontale déployée par le biais d'une rotation à 90 degrés par rapport au dossier. Dès lors, le bras horizontal reçoit et supporte une partie d'un bord de l'assise.

Le document EP 0170116 présente ainsi un strapontin pouvant atteindre une unique position assise. En effet, le strapontin est dans cette unique position assise lorsque le dossier est dans sa position d'utilisation et lorsque l'assise est dans sa position horizontale déployée.

Le document EP 2583897 décrit un strapontin semblable à ce type de strapontin.

Le document WO 9617743 décrit un strapontin pour véhicule constitué par un siège. Ce strapontin peut se replier à plat et latéralement dans une position escamotée sous une fenêtre. Le strapontin peut être rangé derrière des panneaux décoratifs latéraux, sans masquer les fenêtres ou obstruer une zone de chargement du plancher du véhicule.

Le strapontin comprend une assise qui repose sur un tube coudé extérieur articulé à la paroi du véhicule et un tube coudé intérieur reposant sur un plancher dans une position assise. Un mécanisme de retrait produit le repliement automatique du tube coudé intérieur contre l'assise lorsque le siège est basculé vers sa position escamotée.

Les documents CA 2791173, FR 2980773 et EP 2574551 présentent un strapontin pour aéronef comportant un châssis. Ce châssis porte un appui-tête, un dossier et une assise. Le châssis est monté pivotant par rapport à un montant structural à l'aide d'une charnière à double articulation. Le strapontin peut alors être agencé selon trois positions.

Le strapontin peut notamment être positionné dans une première position dans laquelle le strapontin ferme un couloir, le dossier étant perpendiculaire à un axe longitudinal du couloir. Un individu assis sur le strapontin regarde alors uniquement vers l'avant de l'aéronef.

De plus, le strapontin peut atteindre deux autres positions, le dossier étant sensiblement parallèle l'axe longitudinal du couloir dans ces deux positions.

Le document EP 2484589 décrit un strapontin muni d'un dossier et d'une assise articulée au dossier.

Le dossier coulisse latéralement sur des rails pour être disposé dans une position escamotée au sein d'un renfoncement, et pour être extrait hors de se renfoncement dans la position assise.

Les strapontins décrits précédemment ne permettent donc pas à un individu de se positionner sur le strapontin en dirigeant son regard vers l'avant ou vers l'arrière de l'aéronef suivant son choix. De plus, ces strapontins ne comprennent pas de systèmes de protection en cas de crash, dénommé « crashworthy » en langue anglaise.

Le document FR 2863558 décrit un siège présentant une assise et un dossier.

Ce document FR 2863558 est éloigné du domaine de l'invention en n'ayant pas trait à un strapontin.

Le document US 2014/319275 est aussi connu.

La présente invention a alors pour objet de proposer un strapontin permettant de s'affranchir des limitations mentionnées ci-dessus.

Un strapontin est alors muni d'une structure porteuse, cette structure porteuse comprenant au moins une assise mobile en rotation autour d'un axe de rétraction, le strapontin comprenant une structure de montage pour monter la structure porteuse sur une paroi éventuellement verticale.

La structure de montage comprend au moins deux ensembles de montage, chaque ensemble de montage comprenant un bras et une articulation destinée à être fixée à la paroi, l'articulation d'un ensemble de montage conférant au bras de cet ensemble de montage au moins un degré de liberté en rotation autour d'un axe de rangement. Chaque bras est mobile en rotation autour de l'axe de rangement correspondant d'une position de stockage visant à escamoter la structure porteuse contre la paroi vers une position d'utilisation éloignée de la paroi et atteinte notamment pour permettre à un individu de s'assoir sur la structure porteuse. De plus, la structure porteuse est articulée à chaque bras par un arrangement de pivotement, l'arrangement de pivotement étant articulé à chaque bras selon un axe de pliage, les axes de pliage et de rangement étant parallèles entre eux. L'arrangement de pivotement confère au moins un degré de liberté en rotation à la structure porteuse par rapport aux bras autour d'un axe dit « axe en élévation » en raison de son extension d'un plancher vers un plafond. La structure porteuse est mobile en rotation autour de l'axe en élévation d'une première position vers une deuxième position au moins lorsque lesdits bras sont dans leurs positions d'utilisation.

Dès lors, le strapontin comprend une structure porteuse comprenant au moins une assise. L'assise est mobile en rotation autour d'un axe de rétraction d'une position rétractée à une position d'assise, un individu pouvant s'assoir sur l'assise dans la position d'assise. Pour être déplacée de la position d'assise à la position rétractée, l'assise peut recevoir un ressort ou un vérin à gaz permettant une remontée automatique vers la position rétractée. Un système de verrouillage peut aussi être mis en oeuvre pour bloquer l'assise sur requête dans la position rétractée et/ou la position d'assise.

La structure porteuse peut aussi comprendre un dossier. Ce dossier peut comprendre une toile tendue lorsque l'assise est positionnée dans la position d'utilisation, ou encore un cadre rigide.

En outre, la structure porteuse peut aussi comprendre un système de retenue, tel qu'un harnais par exemple. Un tel système de retenue peut comprendre au moins une sangle, voire au moins un enrouleur.

Selon l'invention, cette structure porteuse est attachée à une paroi par le biais d'une structure de montage.

Cette structure de montage inclut deux bras. Chaque bras est articulé à la paroi par le biais d'une articulation et, à la structure porteuse, par le biais de l'arrangement de pivotement.

Le terme « bras » désigne une pièce allongée s'étendant selon une direction entre deux extrémités. Une première extrémité est articulée à une pièce mécanique dite « articulation » de manière à être mobile au moins en rotation autour de l'axe de rangement. Une deuxième extrémité du bras est articulée à un arrangement de pivotement. Le déplacement en rotation d'un bras autour de l'axe de rangement permet de rapprocher ou d'éloigner la deuxième extrémité de la paroi portant l'articulation.

Deux bras représentent alors sensiblement deux côtés d'un quadrilatère déformable. La rotation des bras autour de l'axe de rangement permet de déformer le quadrilatère pour déplacer la structure porteuse contre la paroi ou pour éloigner la structure porteuse de la paroi.

Par exemple, la structure porteuse et les bras sont sensiblement parallèles à la paroi lorsque le strapontin est escamoté.

A partir de cette position, les bras sont déplacés en rotation autour de l'axe de rangement vers leurs positions d'utilisation.

Dès lors, la structure porteuse peut pivoter par rapport aux bras autour de l'axe en élévation d'une première position vers une deuxième position.

L'invention permet si besoin d'effectuer une rotation de la structure porteuse sur une grande amplitude angulaire, pour positionner un individu selon le sens d'avancement du véhicule ou selon un sens contraire au sens d'avancement par exemple.

De plus, les bras peuvent posséder d'autres degrés de liberté pour notamment permettre l'utilisation d'un absorbeur d'énergie, ou encore l'utilisation d'un vérin de réglage de la hauteur de l'assise par rapport à un plancher.

Par conséquent, l'invention propose un siège du type strapontin qui est fixé à une paroi. Les bras de la structure de montage peuvent permettre au strapontin de répondre au travers de leurs cinématiques à des exigences de crash, à la possibilité de passer d'une installation face au sens de la marche à une installation opposée au sens de la marche, ainsi que d'être stocké le long d'une paroi. Par ailleurs, l'architecture du siège peut permettre avantageusement d'ajouter une faculté de réglage en hauteur du strapontin, voire une faculté de réglage de la position du strapontin par rapport à une direction d'extension longitudinale de la paroi.

La structure porteuse est mobile en rotation sur 180 degrés autour de l'axe en élévation de la première position vers la deuxième position, ledit axe de rangement étant destiné à être parallèle à ladite paroi.

Le strapontin ne limite alors pas la position du strapontin soit face au sens d'avancement de l'aéronef, soit selon un sens contraire au sens d'avancement de l'aéronef.

La structure porteuse est ainsi mobile en rotation sur 90 degrés autour de l'axe en élévation de la première position vers une position intermédiaire, et sur 90 degrés autour de l'axe en élévation de la position intermédiaire vers la deuxième position.

Par ailleurs, la structure de montage peut comporter un vérin à longueur réglable relié à au moins un bras pour ajuster une hauteur du strapontin par rapport à un sol.

Le terme « sol » désigne notamment un plancher.

Le terme « relié » signifie que le vérin à longueur réglable coopère mécaniquement avec un bras, directement ou au travers d'autres organes mécaniques, afin que le vérin à longueur réglable soit déplacé par le bras et/ou puisse déplacer un bras.

Un tel vérin à longueur réglable peut par exemple être un vérin à gaz commandé par un actionneur, et notamment un vérin à gaz blocable par l'actionneur. L'actionneur est en communication fluidique avec le vérin à gaz. Un tel actionneur peut comprendre un bouton par exemple positionné sur l'assise.

Le vérin à longueur réglable est relié à un bras. Un tel vérin à longueur réglable permet de régler soit la position de la structure de montage par rapport au bras, soit la position d'un bras afin d'ajuster la hauteur de l'assise.

Par ailleurs, la structure de montage peut comporter un absorbeur d'énergie relié à au moins un bras.

Le terme « relié » signifie que l'absorbeur d'énergie coopère mécaniquement avec un bras, directement ou au travers d'autres organes mécaniques, afin qu'un déplacement d'un bras suite à un choc génère une déformation de l'absorbeur d'énergie.

Un tel absorbeur d'énergie peut comprendre un fil rigide formant une boucle enroulée autour d'un axe. Un absorbeur d'énergie peut comprendre un système déformable en compression et/ou en traction par exemple du type décrit dans le document US2009/0267390.

Par exemple, l'absorbeur d'énergie est interposé entre un bras et un arrangement de pivotement. En cas d'accident, la structure porteuse et l'arrangement de pivotement se déplacent par rapport au bras en sollicitant l'absorbeur d'énergie.

Selon un autre exemple, en cas d'accident, les bras se déplacent en sollicitant l'absorbeur d'énergie.

Le cas échéant un vérin à longueur réglable et un absorbeur d'énergie sont agencés en série.

Par ailleurs, la structure de montage peut comporter un système d'immobilisation manoeuvrable par un humain pour bloquer sur requête lesdits bras au moins dans la position de stockage.

Selon un autre aspect, l'articulation d'un ensemble de montage peut conférer au bras de cet ensemble de montage au moins un degré de liberté en translation le long d'un axe transversal destiné à être parallèle à ladite paroi.

Cet axe transversal peut être différent de l'axe de rangement ou être confondu avec l'axe de rangement.

Une articulation peut par exemple prendre la forme d'un pivot glissant permettant de déplacer le strapontin parallèlement à la paroi.

Eventuellement, un système de verrouillage permet de bloquer le strapontin dans la position souhaitée. Un tel système de verrouillage peut par exemple comprendre deux crochets pour bloquer le strapontin dans deux positions distinctes. De manière alternative, le système de verrouillage peut par exemple comprendre un « peigne » coopérant avec un doigt de verrouillage relié à un bras pour permettre un verrouillage dans des positions intermédiaires. Une autre alternative consiste à utiliser un verrou mécanique/hydraulique.

Selon un autre aspect, l'articulation d'un ensemble de montage peut conférer au bras de cet ensemble de montage au moins un degré de liberté en rotation autour d'un axe transversal qui est destiné à être parallèle à la paroi.

Cet axe transversal peut être différent de l'axe de rangement ou être confondu avec l'axe de rangement.

Par exemple, les bras peuvent effectuer une première rotation autour de leurs axes de rangement pour passer de la position de stockage à la position d'utilisation, et inversement.

De plus, les bras peuvent effectuer une deuxième rotation autour de leurs axes transversaux suite à un crash pour activer un absorbeur d'énergie, ou encore pour régler la position en hauteur du strapontin.

La déformation du quadrilatère formé par deux bras permet d'assurer les fonctions de course en cas de crash et de réglage en hauteur du strapontin.

Selon une première réalisation, l'arrangement de pivotement comporte pour chaque ensemble une tige, chaque tige étant solidaire de la structure porteuse et étant reliée au bras correspondant par un pivot autorisant uniquement une rotation de la tige par rapport au bras autour de l'axe en élévation.

Une bielle peut être solidaire d'une tige, un vérin à longueur réglable et/ou un absorbeur d'énergie étant agencés entre ladite bielle et la structure porteuse, chaque bras étant mobile en rotation autour de l'axe de rangement de la position de stockage vers la position d'utilisation et autour d'un axe transversal qui est destiné à être parallèle à ladite paroi.

L'expression « et/ou » signifie que soit un vérin à longueur réglable soit un absorbeur d'énergie ou encore soit un vérin à longueur réglable et un absorbeur d'énergie sont agencés entre la bielle et la structure porteuse.

La rotation d'un bras suite à un crash peut entraîner la rotation de la tige puis de bielle qui sollicite le cas échéant l'absorbeur d'énergie.

A l'inverse, l'extension ou la rétraction d'un vérin à longueur réglable génère la rotation de la bielle, puis de la tige, puis du bras correspondant, et dès lors, le déplacement de la structure porteuse en élévation.

Eventuellement, l'ajout en série d'un absorbeur d'énergie étirable et d'un verrou de blocage commandé permet de bénéficier d'un réglage en hauteur du strapontin. Un individu déforme alors élastiquement l'absorbeur d'énergie lorsque le verrou de blocage est déverrouillé ce qui permet de régler la hauteur du strapontin.

En outre, au moins un bras peut porter un verrou rotatif, ladite structure porteuse comportant deux encoches ledit verrou présente deux doigts aptes à pénétrer respectivement dans lesdites deux encoches lorsque la structure porteuse est respectivement dans la première position et la deuxième position.

Les encoches peuvent s'étendre en élévation selon un arc de cercle.

Selon une deuxième réalisation, l'arrangement de pivotement peut comporter une barre s'étendant en élévation le long de l'axe en élévation en étant articulée à chaque bras, la structure porteuse comprenant un tube agencé autour de la barre, ladite assise étant portée par ledit tube.

L'assise est articulée au tube, ou à une structure solidaire du tube, tel qu'un dossier ou des barres de fixation par exemple.

Cette structure est relativement simple et compacte.

Selon un autre aspect, la barre peut comporter un premier moyen d'immobilisation en rotation comprenant des crabots, le tube comportant un deuxième moyen d'immobilisation en rotation comprenant des crabots coopérant avec le premier moyen d'immobilisation en rotation, une rotation du tube par rapport à ladite barre autour de l'axe en élévation induisant un désengagement du premier moyen d'immobilisation du deuxième moyen d'immobilisation puis un réengagement du premier moyen d'immobilisation dans le deuxième moyen d'immobilisation.

Les crabots peuvent être arrondis pour favoriser le glissement de chaque crabot du premier moyen d'immobilisation le long d'un crabot du deuxième moyen d'immobilisation lors d'une rotation de la barre. Lors d'une telle rotation, le tube est déplacé en translation par rapport à la barre le long de l'axe en élévation.

Eventuellement, la structure porteuse peut comporter une têtière mobile en rotation par rapport au tube d'une position verticale vers une position horizontale, la têtière portant un pion coopérant avec une butée solidaire de la barre, le pion étant accolé à ladite butée lorsque la têtière est dans la position verticale, ledit pion étant localisé sous la butée avec la présence d'un jeu en élévation entre la butée et le pion lorsque la têtière est dans la position horizontale pour autoriser le déplacement en rotation du tube par rapport à la barre.

La têtière sert de moyen d'activation de la rotation de la structure porteuse.

Quand la têtière est dans sa position verticale, le jeu séparant le pion de la butée n'est pas suffisant pour permettre aux crabots du deuxième moyen d'immobilisation d'être extrait des crabots du premier moyen d'immobilisation. La structure porteuse ne peut alors pas être mise en rotation autour de l'axe en élévation.

Un individu incline alors la têtière dans sa position horizontale pour augmenter ce jeu et déplacer en rotation la structure porteuse.

Selon un autre aspect, un système d'immobilisation peut comporter un assemblage extensible muni de deux organes mobiles l'un par rapport à l'autre, un des deux organes étant articulé à un bras et l'autre organe étant articulé à l'autre bras, au moins un moyen de blocage mobile en translation étant agencé dans un orifice des deux organes lorsque les bras sont dans la position de stockage pour immobiliser un organe par rapport à l'autre organe.

Un desdits organes peut être un vérin à longueur réglable.

En outre, l'assemblage extensible peut comporter un absorbeur d'énergie, l'absorbeur d'énergie étant attaché à un desdits organes et à un desdits bras.

L'invention vise de plus un aéronef muni d'une paroi, cet aéronef comportant un strapontin selon l'invention, lesdites articulations du strapontin étant portées par la paroi.

Eventuellement, l'aéronef comprenant un couloir s'étendant longitudinalement de l'arrière de l'aéronef vers l'avant de l'aéronef, la paroi délimitant transversalement au moins partiellement le couloir, la première position positionne un individu assis sur le strapontin vers l'avant de l'aéronef et la deuxième position positionne ledit individu vers l'arrière de l'aéronef.

L'invention et ses avantages apparaîtront avec plus de détails dans le cadre de la description qui suit avec des exemples donnés à titre illustratif en référence aux figures annexées qui représentent :
- les figures 1 à 11, des schémas présentant un strapontin muni de bras mobiles autour d'axes de rangement sensiblement horizontaux,
- les figures 12 à 19, des schémas présentant un strapontin muni de bras mobiles autour d'axes de rangement sensiblement verticaux, et
- la figure 20, un schéma présentant un strapontin muni de bras mobiles autour d'axes de rangement sensiblement verticaux et disposés sur une barre verticale.

Les éléments présents dans plusieurs figures distinctes sont affectés d'une seule et même référence.

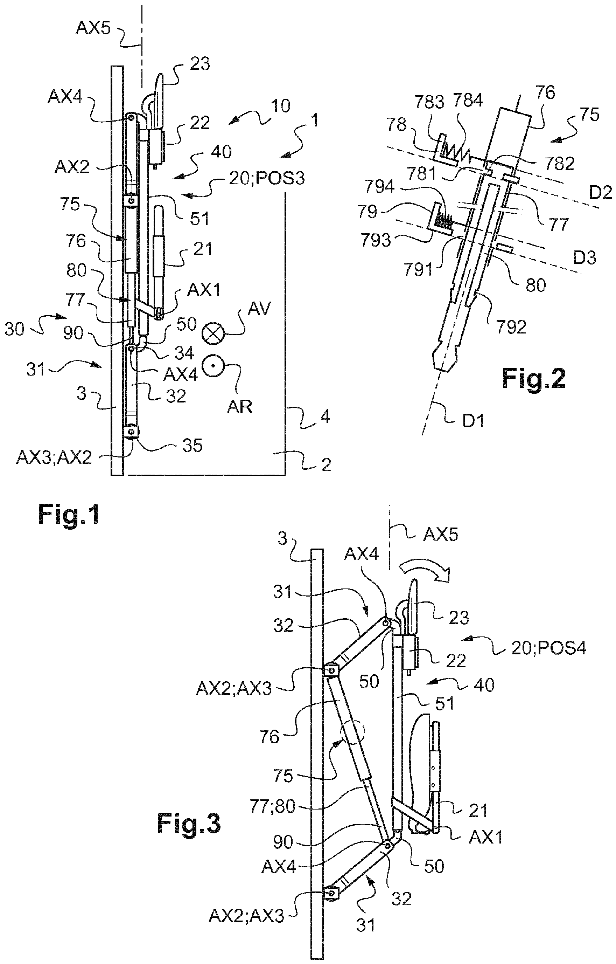

La figure 1 présente un aéronef 1 muni d'une paroi verticale 3. Cette paroi verticale 3 peut être une paroi délimitant transversalement un couloir 2, éventuellement conjointement avec une autre paroi verticale 4. Un tel couloir 2 peut s'étendre selon sa longueur de l'arrière AR vers l'avant AV de l'aéronef.

L'invention vise un strapontin 10 pouvant être rangé contre la paroi verticale 3. Ce strapontin peut être déplié pour permettre à un individu de s'assoir si besoin.

Quelle que soit la réalisation, ce strapontin 10 comporte alors une structure porteuse 20 munie d'une assise 21. De plus, le strapontin 10 est muni d'une structure de montage 30 qui s'interface entre la structure porteuse 20 et la paroi verticale 3.

La structure de montage 30 a pour fonction d'attacher la structure porteuse 20 à la paroi verticale 3, tout en conférant une liberté de mouvement à la structure porteuse 20. Ainsi, la structure de montage 30 permet à la structure porteuse 20 d'être rapprochée ou éloignée de la paroi verticale, et permet à la structure porteuse d'effectuer une rotation autour d'un axe en élévation AX5 d'une première position vers une deuxième position. Lorsque la structure porteuse est dans la première position, un individu assis sur la structure porteuse peut regarder vers l'avant AV de l'aéronef. Par contre, lorsque la structure porteuse est dans la deuxième position, un individu assis sur la structure porteuse peut regarder vers l'arrière AR de l'aéronef.

Dès lors, la structure de montage 30 inclut au moins deux ensembles de montage 31. Par exemple, la structure de montage comprend un ensemble supérieur et un ensemble inférieur, les termes « inférieur » et « supérieur » faisant référence à la direction en élévation de la paroi verticale 3 d'un plancher vers un plafond.

Chaque ensemble de montage possède notamment un bras 32 et une articulation 35. L'articulation 35 est d'une part fixée à la paroi verticale 3 et d'autre part au bras 32 correspondant. Cette articulation 35 d'un ensemble de montage octroie au bras 32 de cet ensemble de montage au moins un degré de liberté en rotation autour d'un axe dénommé « axe de rangement AX2 » par commodité. Les axes de rangement AX2 des bras sont au minimum parallèles entre eux, et éventuellement confondus.

De plus, la structure de montage comporte un arrangement de pivotement 40 pour articuler chaque bras 32 à la structure porteuse 20. L'arrangement de pivotement est articulé à chaque bras 32 selon un axe de pliage AX4.

L'arrangement de pivotement peut comprendre un ensemble articulé à chaque bras respectivement selon un axe de pliage AX4 selon la figure 1. Alternativement, l'arrangement de pivotement peut comprendre un sous-ensemble par bras, chaque sous-ensemble étant articulé au bras correspondant par son propre axe de pliage.

Indépendamment de l'alternative, la structure de montage 30 comporte donc un axe de pliage AX4 par bras. Les axes de pliage AX4 des bras sont au minimum parallèles entre eux, et éventuellement confondus. De plus, les axes de pliage AX4 sont distincts des axes de rangement AX2, mais parallèles aux axes de rangement AX2.

Les axes de pliage AX4 et les axes de rangement AX2 confèrent aux bras 32 une mobilité en rotation, autour de l'axe de rangement AX2 correspondant par rapport à la paroi verticale, d'une position de stockage POS3 visant à rapprocher la structure porteuse 20 de la paroi verticale 3, vers une position d'utilisation visant à éloigner transversalement la structure porteuse 20 de la paroi verticale 3.

En outre, l'arrangement de pivotement 40 confère au moins un degré de liberté en rotation à la structure porteuse 20 par rapport aux bras 32 autour d'un axe en élévation AX5. Par suite, la structure 20 est mobile en rotation autour de l'axe en élévation AX5 de la première position vers la deuxième position au moins lorsque les bras 32 sont dans leurs positions d'utilisation. En effet, une rotation de la structure porteuse autour de l'axe en élévation peut être impossible dans la position de stockage POS3 des bras en raison de la proximité de la paroi verticale 3.

Par exemple, la structure porteuse 20 est mobile en rotation sur 180 degrés autour de l'axe en élévation AX5 de la première position POS1 vers la deuxième position POS2 illustrées sur certaines figures.

Entre la première position et la deuxième position, la structure porteuse peut atteindre au moins une position intermédiaire. Eventuellement, la structure porteuse 20 est alors mobile en rotation sur 90 degrés selon un sens donné autour de l'axe en élévation AX5 de la première position POS1 vers une position intermédiaire, et sur 90 degrés selon ledit sens autour de l'axe en élévation AX5 de la position intermédiaire vers la deuxième position.

Par ailleurs, l'assise 21 est mobile en rotation autour d'un axe de rétraction AX1. Cet axe de rétraction AX1 est parallèle à un axe orthogonal à l'axe en élévation, ou encore orthogonal à l'axe en élévation.

Selon un autre aspect, la structure de montage 30 peut comporter un vérin à longueur réglable 80 relié directement ou indirectement à au moins un bras 32 pour ajuster une hauteur du strapontin 10 par rapport à un sol.

Selon un autre aspect, la structure de montage 30 peut comporter un absorbeur d'énergie 90 relié directement ou indirectement à au moins un bras 32.

Par exemple, un absorbeur d'énergie 90 est solidarisé à un vérin à longueur réglable 80.

Selon un autre aspect, la structure de montage 30 comporte un système d'immobilisation 75 qui est manoeuvrable par un humain pour bloquer les bras 32 au moins dans la position de stockage POS3 sur requête.

Eventuellement, le système d'immobilisation immobilise directement les bras, ou indirectement par exemple en coopérant avec un vérin à longueur réglable 80.

Selon un autre aspect, l'articulation 35 d'un ensemble de montage peut conférer au bras 32 de cet ensemble de montage au moins un degré de liberté en translation le long d'un axe dénommé par commodité « axe transversal AX3 ». Cet axe transversal AX3 est parallèle à la paroi verticale 3, voire à un axe perpendiculaire à l'axe en élévation AX5. L'axe transversal AX3 est éventuellement confondu ou orthogonal à l'axe de rangement de l'ensemble de montage.

Selon un autre aspect, l'articulation 35 d'un ensemble de montage peut conférer au bras 32 de cet ensemble de montage au moins un degré de liberté en rotation autour d'un tel axe transversal AX3 destiné à être parallèle à ladite paroi 3.

Selon la première réalisation de la figure 1, les axes de pliage AX4 et les axes de rangement AX2 sont horizontaux. Ces axes de pliage AX4 et les axes de rangement AX2 sont ainsi parallèles à un axe orthogonal à l'axe en élévation. Chaque bras effectue une rotation autour de l'axe de rangement AX2 correspondant, cet axe de rangement AX2 étant confondu avec l'axe transversal AX3 de l'ensemble de montage, pour passer de la position de stockage POS3 à la position d'utilisation et inversement.

En outre, chaque bras peut effectuer une translation le long de l'axe de rangement AX2.

L'articulation d'un ensemble de montage peut ainsi comprendre un tube fixé à la paroi en s'étendant selon l'axe de rangement AX2 de cet ensemble de montage. Ce tube traverse alors au moins un orifice du bras correspondant. Le bras peut alors effectuer une rotation autour du tube, et peut coulisser sur le tube.

Par ailleurs, le strapontin peut inclure un système d'immobilisation 75 s'étendant d'une extrémité articulée à un bras vers une extrémité à articuler directement ou indirectement à un autre bras.

Ce système d'immobilisation 75 comporte un assemblage extensible muni de deux organes 76, 77 qui sont mobiles par exemple en translation l'un par rapport à l'autre. Un des deux organes 76 est ainsi articulé à un bras et l'autre organe 77 est articulé à l'autre bras.

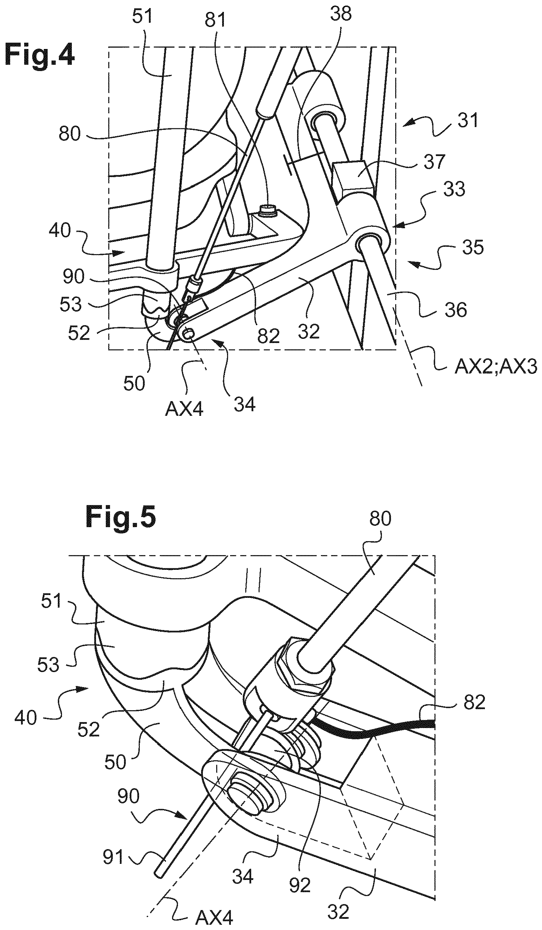

Par exemple, un des organes 77 est un vérin à longueur réglable 80 commandé par un bouton 81 visible sur la figure 4. Un tel bouton est éventuellement agencé sur l'assise.

De plus, l'assemblage extensible peut comporter un absorbeur d'énergie 90 qui est attaché à un desdits organes 77 et à un des bras 32.

Selon l'exemple de la figure 1, un organe de l'assemblage extensible est articulé au bras 32 d'un ensemble de montage supérieur. L'autre organe de l'assemblage extensible est un vérin à longueur variable solidaire d'un absorbeur d'énergie qui est relié au bras 32 d'un ensemble de montage inférieur.

En référence à la figure 2, un organe s'étend partiellement à l'intérieur d'un tube de l'autre organe, en étant monté de manière coulissante dans ce tube. Au moins un moyen de blocage 78, 79 peut empêcher le coulissement d'un organe par rapport à l'autre.

Par exemple, un premier moyen de blocage s'insère dans un orifice 781, 782 des deux organes 76, 77 lorsque les bras 32 sont dans la position de stockage pour immobiliser un organe 76 par rapport à l'autre organe 77. Un deuxième moyen de blocage 79 s'insère dans un orifice 791, 792 des deux organes 76, 77 lorsque les bras 32 sont dans la position d'utilisation pour immobiliser un organe 76 par rapport à l'autre organe 77. Chaque moyen de blocage 78, 79 peut comprendre une guillotine 783, 793 mobile en translation selon une direction D2, D3 orthogonale à la direction d'extension D1 de l'assemblage extensible, et un ressort 784, 794 tendant à positionner le moyen de blocage dans les orifices de l'assemblage extensible.

Lorsqu'un individu débloque le premier moyen de blocage, l'assemblage extensible s'étend.

En référence à la figure 3, les bras effectuent alors une rotation autour de leurs axes de rangement pour atteindre la position d'utilisation POS4 illustrée. Le deuxième moyen de blocage 79 maintient alors l'assemblage extensible dans une position étirée. L'opération inverse permet de retourner dans la position de stockage.

L'assise peut dès lors être manoeuvrée pour atteindre sa position assise.

Par ailleurs et en cas de crash, l'assise se déplace alors vers le plancher. Ce déplacement induit la sollicitation l'absorbeur d'énergie.

En outre, la structure peut aussi être tournée autour de l'axe en élévation AX5.

A cet effet, l'arrangement de pivotement 40 comporte une barre 50. Cette barre s'élève en élévation le long de l'axe en élévation AX5 en étant articulée à chaque bras 32.

La figure 4 illustre un bras 32 du siège articulé à la barre 50. Ce bras 32 est porté par un tube de l'articulation de l'ensemble de montage. Un verrou 38 à vis voire des butées 37 permettent de régler la position du bras le long de l'axe transversal AX3 du tube 36.

En outre, cette figure 4 fait apparaître le bouton 81 décrit précédemment pour commander le vérin à longueur variable 80.

En référence à la figure 5, le bras comporte une chape femelle traversée par une broche 92. La barre 50 présente alors une fourche agencée dans la chape femelle autour de la broche 92. Le cas échéant, cette broche est articulée à un organe du système d'immobilisation ou selon cette figure à un absorbeur d'énergie 90.

Par exemple, l'absorbeur d'énergie comprend un fil 91 formant une boucle fermée. Le fil 91 s'étend d'une extrémité libre vers une extrémité solidaire de l'assemblage extensible en entourant la broche 92. D'autres absorbeurs d'énergie sont envisageables.

Par ailleurs et en référence à la figure 5, la structure porteuse 20 comprend un tube 51 agencé autour de la barre 50, l'assise 21 étant portée par le tube 51.

Le tube possède un degré de liberté en rotation autour de la barre, et un degré de liberté en translation le long de cette barre.

En particulier, la barre 50 comporte un premier moyen d'immobilisation 52 en rotation comprenant des crabots. La barre 50 et le premier moyen d'immobilisation 52 peuvent former une seule et même pièce.

En outre, le tube 51 comporte un deuxième moyen d'immobilisation 53 en rotation comprenant des crabots. Le tube 51 et le deuxième moyen d'immobilisation 53 peuvent former une seule et même pièce.

Les crabots forment une succession de creux et de bosses le long d'un chemin périphérique circulaire.

Par ailleurs, la structure porteuse 20 comporte une têtière 23. La têtière peut par exemple être portée par la barre, ou encore par un bloc 22 solidaire de la barre. Un tel bloc 22 peut contenir un système de retenu à sangles.

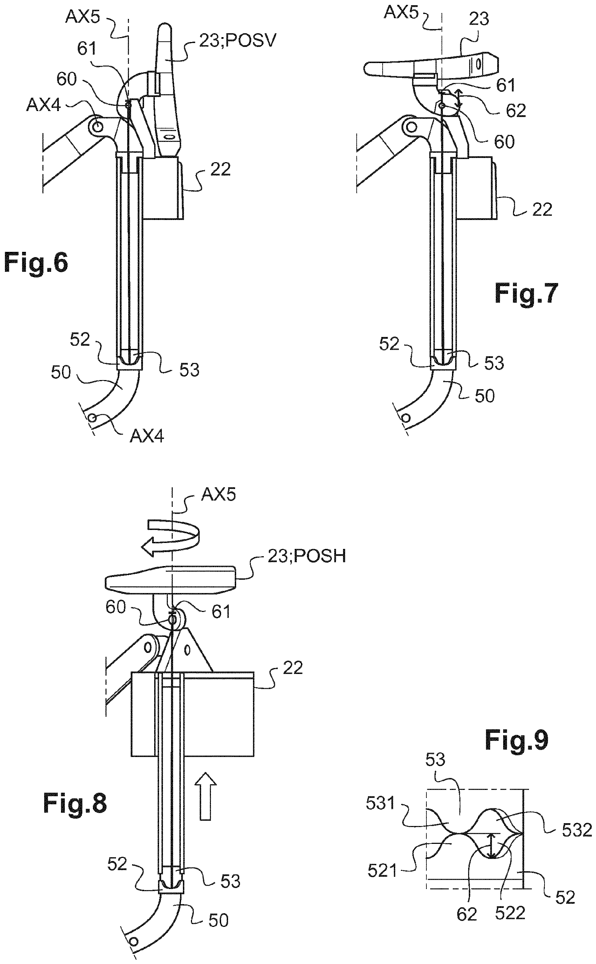

La têtière 23 est fixée à une charnière autorisant un mouvement de rotation de la têtière 23 par rapport au tube 51 d'une position verticale POSV illustrée sur la figure 6 vers une position horizontale POSH. La têtière 23 est notamment mobile autour d'un axe orthogonal à l'axe en élévation AX5.

Cette têtière 23 porte un pion 60 qui coopère avec une butée 61 solidaire de la barre 50. Une telle butée peut comprendre une plaque horizontale par exemple.

Le pion 60 est ainsi accolé à la butée 61 lorsque la têtière 23 est dans la position verticale POSV. De plus, le premier moyen d'immobilisation 52 est en prise avec le deuxième moyen d'immobilisation 53.

Dans cette position, la structure porteuse est immobile en rotation. Par sécurité, un moyen de blocage peut être utilisé pour tendre à maintenir la têtière 23 dans la position verticale POSV, tel qu'un organe élastique par exemple.

Pour déplacer en rotation la structure porteuse, un individu bascule la têtière 23 dans sa position horizontale POSH, le cas échéant en manoeuvrant le moyen de blocage.

En référence à la figure 7, la rotation de la têtière 23 induit un déplacement du pion 60 par rapport à la butée 61. Le pion 60 est alors localisé sous la butée 61. Un jeu 62 en élévation sépare alors la butée 61 et le pion 60.

Ce jeu est favorablement supérieur à la profondeur des creux des crabots des moyens d'immobilisation.

En référence à la figure 9, une rotation du tube 51 par rapport à la barre 50 autour de l'axe en élévation AX5 induit un désengagement du premier moyen d'immobilisation 52 du deuxième moyen d'immobilisation 53, et par suite une translation du tube par rapport à la barre. Les bosses 531 du deuxième moyen d'immobilisation 53 glissent alors sur le premier moyen d'immobilisation 52, et atteignent le haut des bosses 521 du premier moyen d'immobilisation 52.

En poursuivant la rotation du tube 51 par rapport à la barre 50, les bosses 521, 531 d'un moyen d'immobilisation sont réengagées dans un creux 522, 532 de l'autre moyen d'immobilisation.

En référence à la figure 8, un opérateur peut déplacer en rotation le tube 51 par rapport à la barre 50, par exemple en agrippant la têtière.

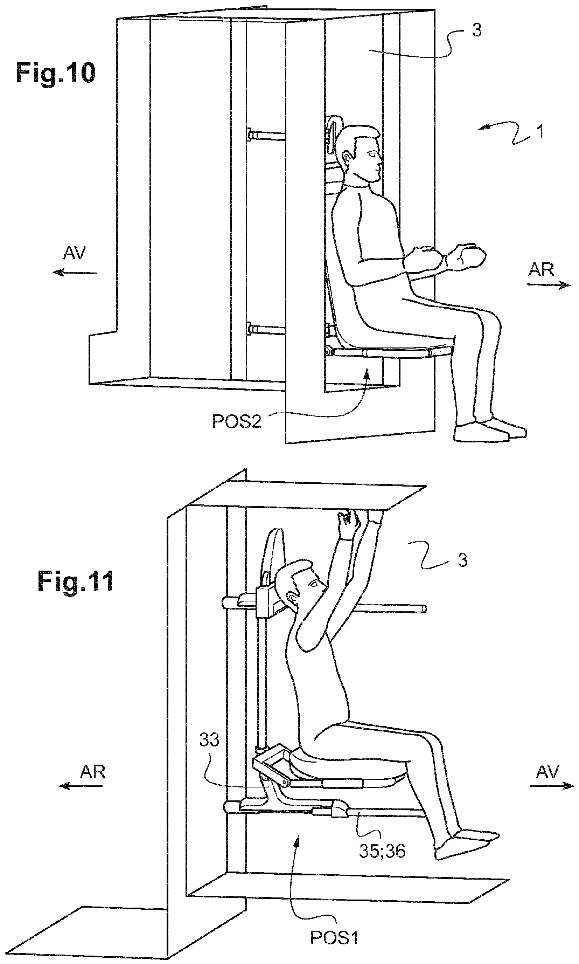

En référence aux figures 10 et 11, un tel strapontin permet de positionner aisément un individu soit vers l'avant AV de l'aéronef comme l'illustre la figure 10, soit vers l'arrière AR de l'aéronef comme l'illustre la figure11.

De plus, le couloir schématisé peut présenter une marche. L'individu peut alors manoeuvrer le vérin à longueur réglable pour régler la hauteur de l'assise par rapport au plancher.

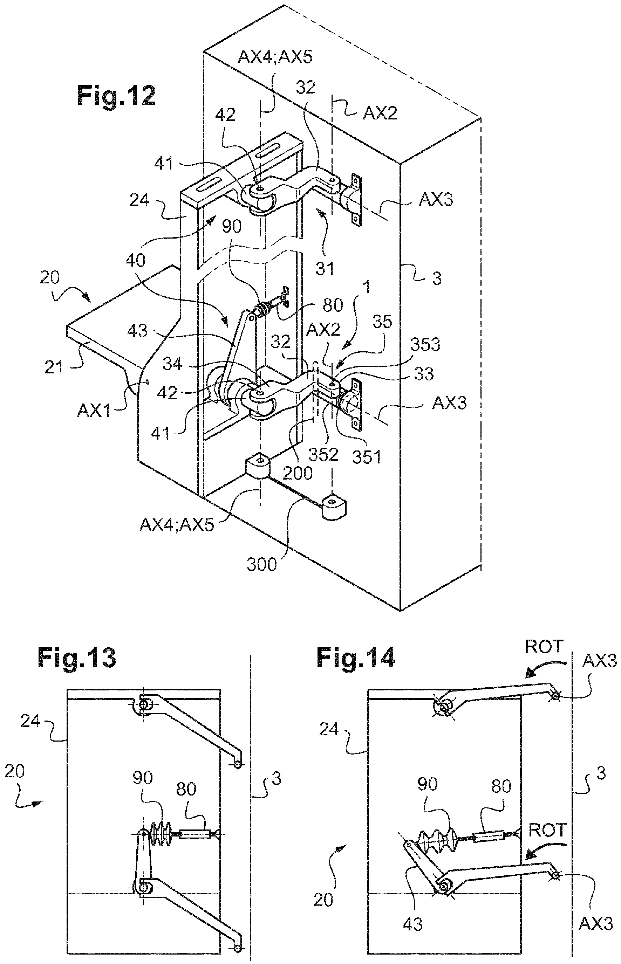

Selon la deuxième réalisation de la figure 12, les axes de pliage AX4 et les axes de rangement AX2 sont verticaux. Ces axes de pliage AX4 et les axes de rangement AX2 sont ainsi parallèles à l'axe en élévation AX5. En outre, les axes de pliages AX4 et l'axe en élévation AX5 peuvent être confondus.

Les bras sont ainsi munis de pivots verticaux au niveau de la paroi verticale 3 qui permettent une cinématique de repliage le long de la paroi verticale 3 pour le stockage du strapontin.

De plus, chaque bras peut effectuer une rotation autour d'un axe transversal AX3 de l'ensemble de montage, cet axe transversal étant orthogonal à l'axe de rangement de l'ensemble de montage. De plus, chaque bras peut se déplacer en rotation autour d'un axe transversal AX3.

En outre, chaque bras peut effectuer une translation le long de l'axe de transversal AX3.

L'articulation d'un ensemble de montage peut ainsi comprendre un cylindre 351 fixé à la paroi en s'étendant selon l'axe de transversal AX3 de cet ensemble de montage. Ce cylindre 351 peut être entouré d'un coulisseau 352 portant un pivot articulé au bras. Ce pivot prend la forme d'une tige 353 traversant alors au moins un orifice du bras 32 correspondant. Le bras 32 peut alors effectuer une rotation autour du cylindre, peut coulisser sur le long du cylindre et peut effectuer une rotation autour du pivot.

Un système de verrouillage peut permettre d'immobiliser le coulisseau en translation par rapport au cylindre, sans toutefois l'immobiliser en rotation. Par exemple, un système de verrouillage comporte des verrous aptes chacun à immobilier en translation le coulisseau.

Par ailleurs, le strapontin peut inclure un système d'immobilisation pour immobiliser chaque bras en rotation autour de l'axe de rangement AX2 en l'absence d'efforts exercés par un individu. Par exemple, ce système d'immobilisation peut comprendre un doigt 200 rétractable dans le bras 32. Par exemple, ce doigt 200 peut être bloqué entre le coulisseau 352 et la paroi 3 dans la position de stockage, et peut être plaqué de l'autre côté du coulisseau 352 dans la position d'utilisation.

Par ailleurs, la structure de montage peut comprendre une assise 21 articulée à un dossier 24. L'assise 21 peut être manoeuvrée en rotation autour d'un axe de rétraction AX1 pour atteindre sa position assise de la figure 12.

Le dossier 24 est alors porté par les bras au travers de l'arrangement de pivotement 40. Eventuellement, le dossier 24 peut coopérer avec une jambe de force 300.

Cet arrangement de pivotement 40 comporte pour chaque ensemble de montage une tige 41. Chaque tige 41 est alors solidaire de la structure porteuse 20, et le cas échéant du dossier 24. De plus, chaque tige est articulée au bras 32 correspondant par un pivot 42 qui autorise uniquement une rotation de la tige 41 par rapport au bras 32 autour de l'axe en élévation AX5.

Par ailleurs, une bielle 43 peut être solidaire d'une tige 41.

Cette bielle 43 est alors attachée à un arrangement comprenant un vérin à longueur réglable 80 et/ou un absorbeur d'énergie 90. Cet arrangement est en outre solidarisé à la structure porteuse, et en le cas échéant au dossier 24.

Par exemple, la bielle 43 s'étend d'une extrémité solidaire d'une tige 41 vers une extrémité attachée à un absorbeur d'énergie 90, un vérin à longueur réglable 80 étant attaché à l'absorbeur d'énergie et à un bord du dossier.

Dès lors en manoeuvrant le vérin à longueur réglable 80, un individu entraîne la rotation du bras 32 relié à ce vérin à longueur réglable 80 autour de l'axe transversal AX3. En fonction du sens de rotation, l'assise 21 est alors rapprochée ou éloignée du plancher.

Par ailleurs, la figure 13 illustre la structure porteuse avant un crash. Suite à un crash et en référence à la figure 14, l'assise se déplace alors vers le plancher. Ce déplacement induit la rotation ROT des bras 32 autour de leurs axes transversaux AX3. Dès lors la bielle 43 effectue un mouvement rotatif. Par suite, cette bielle 43 déforme l'absorbeur d'énergie 90 par traction, compression et/ou torsion.

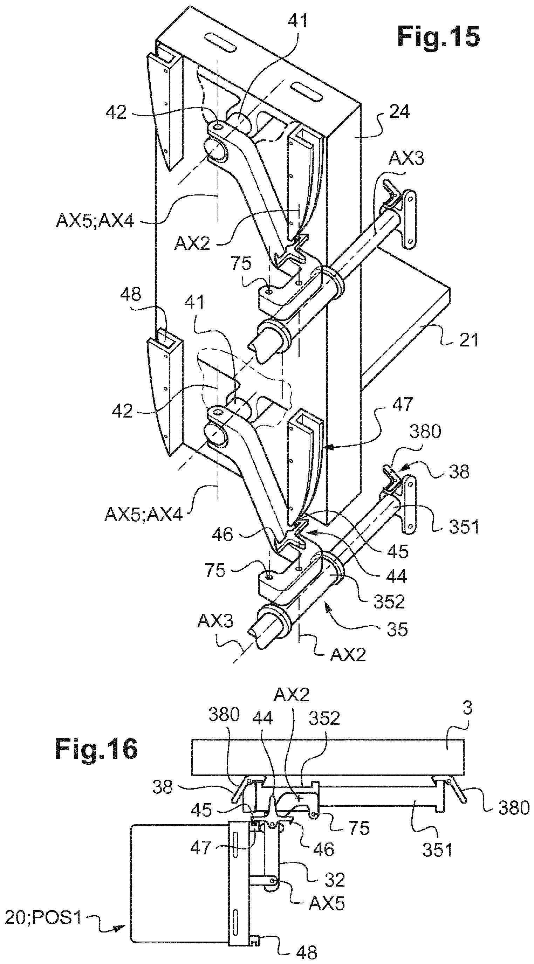

En référence à la figure 15, au moins un bras 32 peut porter un verrou 44 rotatif. Un tel verrou peut comprendre deux doigts 45, 46.

La structure porteuse 20 comporte alors deux encoches 47, 48. Les deux doigts 45, 46 peuvent alors pénétrer respectivement dans les deux encoches 47, 48 lorsque la structure porteuse 20 est respectivement dans la première position et la deuxième position.

Les encoches peuvent décrire des arcs de cercle en raison de la cinématique particulière de la structure porteuse suite à un crash ou un réglage de hauteur.

En outre, des biellettes 380 en L d'un système de verrouillage peuvent permettre de verrouiller chaque coulisseau le long de la paroi.

Des butées de fin de course peuvent aussi être agencées pour absorber les chocs suite à un déplacement de la structure porteuse.

On note que la figure 15 est schématique, le strapontin pouvant inclure des organes précitées non représentées, tel que par exemple un vérin 80, un système d'immobilisation 75.

Les figures 16 à 19 illustrent diverses positions pouvant être atteintes par le strapontin 10.

Selon la figure 16, les bras sont positionnés dans leur position d'utilisation. En outre, la structure porteuse est maintenue dans la première position POS1 par un premier doigt 45 du verrou 44, en prise avec l'encoche 47.

Le premier doigt peut être manoeuvré pour permettre de faire effectuer une rotation de 180 degrés de la structure porteuse 20 autour de l'axe en élévation AX5.

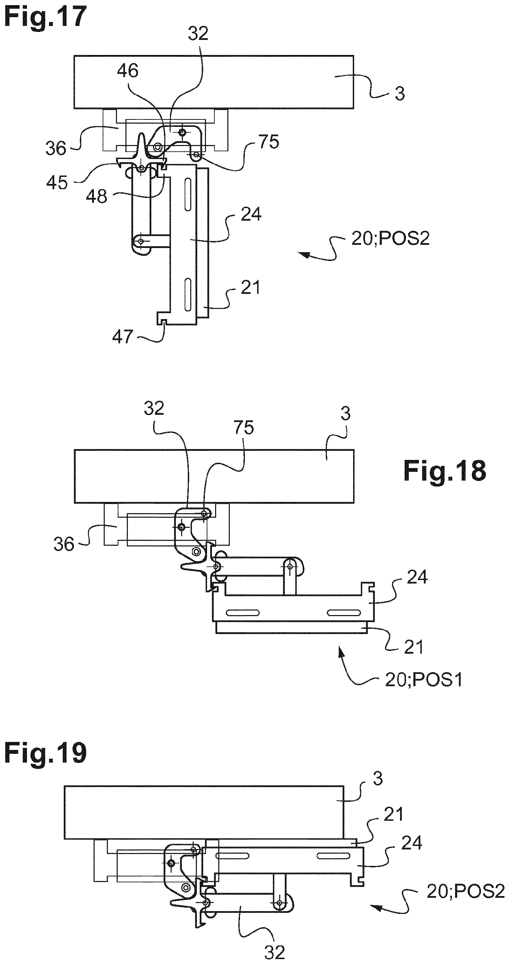

En référence à la figure 17, la structure porteuse est alors maintenue dans la deuxième position POS2 par un deuxième doigt 46 du verrou 44, en prise avec l'encoche 48.

En référence aux figures 18 et 19, les bras peuvent être positionnés dans leurs positions de stockage.

La structure porteuse est soit maintenue dans la première position POS1 illustrée sur la figure 18, soit maintenue dans la deuxième position POS2 illustrée sur la figure 19.

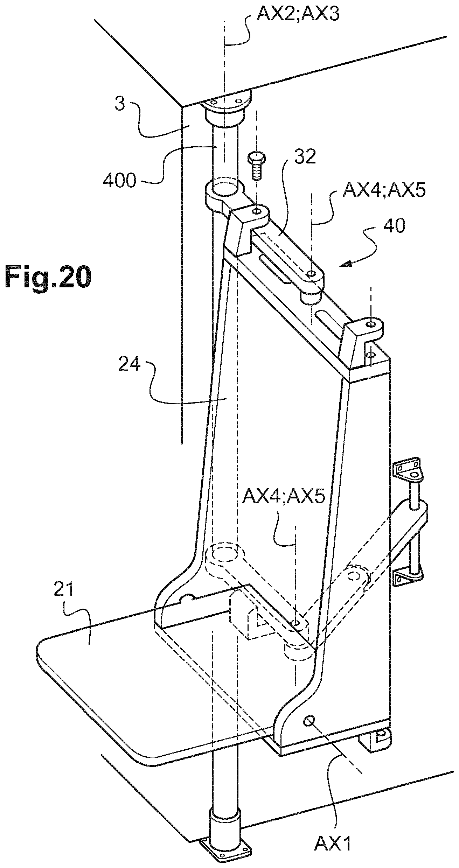

La figure 20 illustre une variante qui ne fait pas partie de l'invention.

Selon cette variante, les bras 32 sont articulés à un rail 400 s'étendant parallèlement à l'axe en élévation AX5.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention tel que défini par les revendications.

## Revendications

1. Strapontin (10) muni d'une structure porteuse (20), ladite structure porteuse (20) comprenant au moins une assise (21) mobile en rotation autour d'un axe de rétraction (AX1), ledit strapontin (10) comprenant une structure de montage (30) pour monter ladite structure porteuse (20) sur une paroi (3), ladite structure de montage (30) comprenant au moins deux ensembles de montage (31), chaque ensemble de montage comprenant un bras (32) et une articulation (35) destinée à être fixée à ladite paroi (3), ladite articulation (35) d'un ensemble de montage conférant au bras (32) de cet ensemble de montage au moins un degré de liberté en rotation autour d'un axe de rangement (AX2) destinée à être parallèle à ladite paroi, ladite structure porteuse (20) étant articulée à chaque bras (32) par un arrangement de pivotement (40), ledit arrangement de pivotement (40) étant articulé à chaque bras (32) selon un axe de pliage (AX4), les axes de pliage (AX4) et de rangement (AX2) étant parallèles entre eux, ledit arrangement de pivotement (40) conférant au moins un degré de liberté en rotation à la structure porteuse (20) par rapport aux bras (32) autour d'un axe en élévation (AX5), chaque bras (32) étant mobile en rotation autour de l'axe de rangement (AX2) correspondant d'une position de stockage (POS3) visant à escamoter la structure porteuse (20) vers une position d'utilisation (POS4) atteinte pour permettre à un individu de s'assoir sur la structure porteuse (20), ladite structure porteuse (20) étant mobile en rotation sur 180 dégrés autour de l'axe en élévation (AX5) d'une première position (POS1) vers une deuxième position (POS2) au moins lorsque lesdits bras (32) sont dans leurs positions d'utilisation (POS4).

2. Strapontin selon la revendication 1,
**caractérisé en ce que** ladite structure porteuse (20) est mobile en rotation sur 90 degrés autour de l'axe en élévation (AX5) de la première position (POS1) vers une position intermédiaire, et sur 90 degrés autour de l'axe en élévation (AX5) de la position intermédiaire vers la deuxième position (POS2).

3. Strapontin selon l'une quelconque des revendications 1 à 2,
**caractérisé en ce que** la structure de montage (30) comporte un vérin à longueur réglable (80) relié à au moins un bras (32) pour ajuster une hauteur du strapontin (10) par rapport à un sol.

4. Strapontin selon l'une quelconque des revendications 1 à 3,
**caractérisé en ce que** ladite structure de montage (30) comporte un absorbeur d'énergie (90) relié à au moins un bras (32).

5. Strapontin selon l'une quelconque des revendications 1 à 4,
**caractérisé en ce que** ladite structure de montage (30) comporte un système d'immobilisation (75) manoeuvrable par un humain pour bloquer lesdits bras (32) au moins dans la position de stockage (POS3) sur requête.

6. Strapontin selon l'une quelconque des revendications 1 à 5,
**caractérisé en ce que** ladite articulation (35) d'un ensemble de montage (31) confère au bras (32) de cet ensemble de montage au moins un degré de liberté en translation le long d'un axe transversal (AX3) destiné à être parallèle à ladite paroi (3).

7. Strapontin selon l'une quelconque des revendications 1 à 2, **caractérisé en ce que** ladite articulation (35) d'un ensemble de montage confère au bras (32) de cet ensemble de montage au moins un degré de liberté en rotation autour d'un axe transversal (AX3) destiné à être parallèle à ladite paroi (3).

8. Strapontin selon l'une quelconque des revendications 1, 2 et 7,
**caractérisé en ce que** ledit arrangement de pivotement (40) comporte pour chaque ensemble de montage une tige (41), chaque tige (41) étant solidaire de la structure porteuse (20) et étant reliée au bras (32) correspondant par un pivot (42) autorisant uniquement une rotation de la tige (41) par rapport au bras (32) autour de l'axe en élévation (AX5).

9. Strapontin selon la revendication 8,
**caractérisé en ce qu'**une bielle (43) est solidaire d'une dite tige (41), un vérin à longueur réglable (80) et/ou un absorbeur d'énergie (90) étant agencés entre ladite bielle (43) et la structure porteuse (20), chaque bras (32) étant mobile en rotation autour de l'axe de rangement (AX2) de la position de stockage (POS3) vers la position d'utilisation (POS4) et autour d'un axe transversal (AX3) qui est destiné à être parallèle à ladite paroi (3).

10. Strapontin selon l'une quelconque des revendications 8 à 9,
**caractérisé en ce qu'**au moins un bras (32) porte un verrou (44) rotatif, ladite structure porteuse (20) comportant deux encoches (47, 48), ledit verrou (44) présentant deux doigts (45, 46) aptes à pénétrer respectivement dans lesdites deux encoches (47, 48) lorsque la structure porteuse (20) est respectivement dans la première position (POS1) et la deuxième position (POS2).

11. Strapontin selon l'une quelconque des revendications 1 à 7,
**caractérisé en ce que** ledit arrangement de pivotement (40) comporte une barre (50) s'étendant en élévation le long de l'axe en élévation (AX5) en étant articulée à chaque bras (32), ladite structure porteuse (20) comprenant un tube (51) agencé autour de la barre (50), ladite assise (21) étant portée par ledit tube (51), ladite barre (50) comportant un premier moyen d'immobilisation (52) en rotation comprenant des crabots, ledit tube (51) comportant un deuxième moyen d'immobilisation (53) en rotation comprenant des crabots coopérant avec le premier moyen d'immobilisation (52) en rotation, une rotation du tube (51) par rapport à ladite barre (50) autour de l'axe en élévation (AX5) induisant un désengagement du premier moyen d'immobilisation (52) du deuxième moyen d'immobilisation (53) puis un réengagement du premier moyen d'immobilisation (52) dans le deuxième moyen d'immobilisation (53).

12. Strapontin selon la revendication 11,
**caractérisé en ce que** ladite structure porteuse (20) comporte une têtière (23) mobile en rotation par rapport au tube (51) d'une position verticale (POSV) vers une position horizontale (POSH), ladite têtière (23) portant un pion (60) coopérant avec une butée (61) solidaire de la barre (50), ledit pion (60) étant accolé à ladite butée (61) lorsque la têtière (23) est dans la position verticale (POSV), ledit pion (60) étant localisé sous la butée (61) avec la présence d'un jeu (62) en élévation entre la butée (61) et le pion (60) lorsque la têtière (23) est dans la position horizontale (POSH) pour autoriser le déplacement en rotation du tube (51) par rapport à la barre (50).

13. Strapontin selon la revendication 5,
**caractérisé en ce que** ledit système d'immobilisation (75) comporte un assemblage extensible muni de deux organes (76, 77) mobiles l'un par rapport à l'autre, un des deux organes (76) étant articulé à un bras et l'autre organe (77) étant articulé à l'autre bras , au moins un moyen de blocage (78, 79) mobile en translation étant agencé dans un orifice des deux organes (76, 77) lorsque les bras (32) sont dans la position de stockage pour immobiliser un organe (76) par rapport à l'autre organe (77).

14. Strapontin selon la revendication 13 et la revendication 3,
**caractérisé en ce qu'**un desdits organes (77) est ledit vérin à longueur réglable.

15. Strapontin selon la revendication 13 et la revendication 4,
**caractérisé en ce que** ledit absorbeur d'énergie (90) est attaché à un desdits organes (77) et à un desdits bras (32).

16. Aéronef (1) muni d'une paroi (3),
**caractérisé en ce que** ledit aéronef (1) comporte un strapontin (10) selon l'une quelconque des revendications 1 à 15, lesdites articulations (35) étant portées par ladite paroi (3).

17. Aéronef selon la revendication 16,
**caractérisé en ce que** ledit aéronef (1) comprend un couloir (2) s'étendant longitudinalement de l'arrière (AR) de l'aéronef (1) vers l'avant (AV) de l'aéronef (1), ladite paroi (3) délimitant transversalement au moins partiellement ledit couloir (2), ladite première position (POS1) positionne un individu vers l'avant (AV) de l'aéronef (1) et ladite deuxième position (POS2) positionne ledit individu vers l'arrière (AR) de l'aéronef (1).

## Patentansprüche

1. Klappsitz (10) mit einer Trägerstruktur (20), wobei die Trägerstruktur (20) mindestens eine Sitzfläche (21) umfasst, die um eine Rückzugsachse (AX1) drehbeweglich ist, wobei der Klappsitz (10) eine Befestigungsstruktur (30) zur Befestigung der Trägerstruktur (20) an einer Wand (3) umfasst,
wobei die Befestigungsstruktur (30) mindestens zwei Befestigungsanordnungen (31) umfasst, wobei jede Befestigungsanordnung einen Arm (32) und ein Gelenk (35) zur Befestigung an der Wand (3) umfasst, wobei das Gelenk (35) einer Befestigungsanordnung dem Arm (32) der Befestigungsanordnung mindestens einen Rotationsfreiheitsgrad um eine Stauachse (AX2) verleiht, die vorgesehen ist, um parallel zu der Wand zu sein,
die Trägerstruktur (20) an jedem Arm (32) durch eine Schwenkanordnung (40) angelenkt ist, wobei die Schwenkanordnung (40) an jedem Arm (32) entlang einer Klappachse (AX4) angelenkt ist, wobei die Klappachse (AX4) und die Stauachse (AX2) parallel zueinander sind, die Schwenkanordnung (40) der Trägerstruktur (20) in Bezug auf die Arme (32) mindestens einen Rotationsfreiheitsgrad um eine Höhenachse (AX5) verleiht, wobei jeder Arm (32) um seine Stauachse (AX2) aus einer Stauposition (POS3) zum Einfahren der Trägerstruktur (20) in eine Gebrauchsposition (POS4) drehbeweglich ist, die erreicht wird, damit eine Person auf der Trägerstruktur (20) sitzen kann,
wobei die Trägerstruktur (20) zumindest, wenn sich die Arme (32) in ihren Gebrauchspositionen (POS4) befinden, um 180 Grad um die Höhenachse (AX5) von einer ersten Position (POS1) in eine zweite Position (POS2) drehbar ist.

2. Klappsitz nach Anspruch 1,
**dadurch gekennzeichnet, dass** die Trägerstruktur (20) um 90 Grad um die Höhenachse (AX5) von der ersten Position (POS1) in eine Zwischenposition und um 90 Grad um die Höhenachse (AX5) von der Zwischenposition in die zweite Position (POS2) drehbar ist.

3. Klappsitz nach einem der Ansprüche 1 bis 2,
**dadurch gekennzeichnet, dass** die Befestigungsstruktur (30) einen Zylinder (80) mit verstellbarer Länge umfasst, der mit mindestens einem Arm (32) verbunden ist, um eine Höhe des Klappsitzes (10) in Bezug auf einen Boden einzustellen.

4. Klappsitz nach einem der Ansprüche 1 bis 3,
**dadurch gekennzeichnet, dass** die Befestigungsstruktur (30) einen Energieabsorber (90) beinhaltet, der mit mindestens einem Arm (32) verbunden ist.

5. Klappsitz nach einem der Ansprüche 1 bis 4,
**dadurch gekennzeichnet, dass** die Befestigungsstruktur (30) ein Immobilisierungssystem (75) beinhaltet, das von einem Menschen betätigbar ist, um die Arme (32) bei Bedarf zumindest in der Stauposition (POS3) zu verriegeln.

6. Klappsitz nach einem der Ansprüche 1 bis 5,
**dadurch gekennzeichnet, dass** das Gelenk (35) einer Befestigungsanordnung (31) dem Arm (32) dieser Befestigungsanordnung mindestens einen Translationsfreiheitsgrad entlang einer Querachse (AX3) verleiht, die vorgesehen ist, um parallel zu der Wand (3) zu sein.

7. Klappsitz nach einem der Ansprüche 1 bis 2,
**dadurch gekennzeichnet, dass** das Gelenk (35) einer Befestigungsanordnung dem Arm (32) der Befestigungsanordnung mindestens einen Rotationsfreiheitsgrad um eine Querachse (AX3) verleiht, die vorgesehen ist, um parallel zu der Wand (3) zu sein.

8. Klappsitz nach einem der Ansprüche 1, 2 und 7,
**dadurch gekennzeichnet, dass** die Schwenkanordnung (40) für jede Befestigungsanordnung eine Stange (41) umfasst, wobei jede Stange (41) fest mit der Trägerstruktur (20) verbunden ist und mit dem entsprechenden Arm (32) durch einen Drehpunkt (42) verbunden ist, der eine Drehung der Stange (41) in Bezug auf den Arm (32) nur um die Höhenachse (AX5) ermöglicht.

9. Klappsitz nach Anspruch 8,
**dadurch gekennzeichnet, dass** ein Lenker (43) mit einer der Stangen (41) fest verbunden ist, dass ein längenverstellbarer Zylinder (80) und/oder ein Energieabsorber (90) zwischen dem Lenker (43) und der Trägerstruktur (20) angeordnet ist, wobei jeder Arm (32) um die Stauachse (AX2) von der Stauposition (POS3) in die Gebrauchsposition (POS4) und um eine Querachse (AX3) drehbar ist, die vorgesehen ist, um parallel zu der Wand (3) zu sein.

10. Klappsitz nach einem der Ansprüche 8 bis 9,
**dadurch gekennzeichnet, dass** mindestens ein Arm (32) einen drehbaren Riegel (44) trägt, dass die Trägerstruktur (20) zwei Kerben (47, 48) aufweist, und dass der Riegel (44) zwei Finger (45, 46) aufweist, die eingerichtet sind, um in die beiden Kerben (47, 48) einzudringen, wenn sich die Trägerstruktur (20) in der ersten Position (POS1) bzw. der zweiten Position (POS2) befindet.

11. Klappsitz nach einem der Ansprüche 1 bis 7,
**dadurch gekennzeichnet, dass** die Schwenkanordnung (40) eine Stange (50) aufweist, die sich in der Höhe entlang der Höhenachse (AX5) erstreckt und an jedem Arm (32) angelenkt ist, und dass die Trägerstruktur (20) ein um die Stange (50) angeordnetes Rohr (51) umfasst, wobei der Sitz (21) von dem Rohr (51) getragen ist,
wobei die Stange (50) ein erstes Drehimmobilisierungsmittel (52) mit Stiften aufweist und das Rohr (51) ein zweites Drehimmobilisierungsmittel (53) mit Stiften aufweist, das mit dem ersten Drehimmobilisierungsmittel (52) zusammenwirkt, wobei eine Drehung des Rohres (51) in Bezug auf die Stange (50) um die Höhenachse (AX5) ein Lösen des ersten Drehimmobilisierungsmittels (52) vom zweiten Drehimmobilisierungsmittel (53) und dann ein Wiedereinrasten des ersten Drehimmobilisierungsmittel (52) in das zweite Drehimmobilisierungsmittel (53) bewirkt.

12. Klappsitz nach Anspruch 11,
**dadurch gekennzeichnet, dass** die Trägerstruktur (20) eine Kopfstütze (23) umfasst, die in Bezug auf das Rohr (51) von einer vertikalen Position (POSV) in eine horizontale Position (POSH) drehbeweglich ist, wobei die Kopfstütze (23) einen Stift (60) trägt, der mit einem Anschlag (61) zusammenwirkt, der mit der Stange (50) fest verbunden ist, dass der Stift (60) an dem Anschlag (61) anliegt, wenn sich die Kopfstütze (23) in der vertikalen Position (POSV) befindet, und dass der Stift (60) unter dem Anschlag (61) mit Spiel (62) in der Höhe zwischen dem Anschlag (61) und dem Stift (60) angeordnet ist, wenn sich die Kopfstütze (23) in der horizontalen Position (POSH) befindet, um die Drehbewegung des Rohres (51) in Bezug auf die Stange (50) zu ermöglichen.

13. Klappsitz nach Anspruch 5,
**dadurch gekennzeichnet, dass** das Immobilisierungssystem (75) eine ausziehbare Anordnung mit zwei relativ zueinander beweglichen Elementen (76, 77) umfasst, wobei eines der beiden Elemente (76) mit einem Arm und das andere Element (77) mit dem anderen Arm gelenkig verbunden ist, wobei mindestens ein translatorisch bewegliches Verriegelungsmittel (78, 79) in einer Öffnung der beiden Elemente (76, 77) angeordnet ist, wenn sich die Arme (32) in der Stauposition befinden, um ein Element (76) relativ zu dem anderen Element (77) zu immobilisieren.

14. Klappsitz nach Anspruch 13 und Anspruch 3,
**dadurch gekennzeichnet, dass** eines der Elemente (77) der längenverstellbare Zylinder ist.

15. Klappsitz nach Anspruch 13 und Anspruch 4,
**dadurch gekennzeichnet, dass** der Energieabsorber (90) an einem der Elemente (77) und einem der Arme (32) befestigt ist.

16. Flugzeug (1) mit einer Wand (3), **dadurch gekennzeichnet, dass** das Flugzeug (1) einen Klappsitz (10) nach einem der Ansprüche 1 bis 15 aufweist, wobei die Gelenke (35) von der Wand (3) getragen sind.

17. Luftfahrzeuge nach Anspruch 16,
**dadurch gekennzeichnet, dass** das Flugzeug (1) einen Korridor (2) aufweist, der sich in Längsrichtung vom Heck (AR) des Flugzeugs (1) zum Bug (AV) des Flugzeugs (1) erstreckt, wobei die Wand (3) den Korridor (2) zumindest teilweise quer begrenzt und die erste Position (POS1) eine Person zum Bug (AV) des Flugzeugs (1) positioniert und die zweite Position (POS2) die Person zum Heck (AR) des Flugzeugs (1) positioniert.

## Claims

1. Jump seat (10) provided with a supporting structure (20), the supporting structure (20) comprising at least one seat pan (21) that can be rotated about a retraction axis (AX1), the jump seat (10) comprising a mounting structure (30) for mounting the supporting structure (20) on a wall (3),
the mounting structure (30) comprising at least two mounting assemblies (31), each mounting assembly comprising an arm (32) and a hinge (35) intended to be fastened to the wall (3), the hinge (35) of a mounting assembly allowing the arm (32) of said mounting assembly at least a degree of freedom to rotate about a stowage axis (AX2) intended to be parallel to the wall,
the supporting structure (20) being hinged to each arm (32) by means of a pivot arrangement (40), the pivot arrangement (40) being hinged to each arm (32) about a folding axis (AX4), the folding (AX4) and stowage (AX2) axes being mutually parallel, the pivot arrangement (40) allowing the supporting structure (20) at least a degree of freedom to rotate about an elevation axis (AX5) relative to the arms (32), each arm (32) being able to rotate about the corresponding stowage axis (AX2) from a storage position (POS3) intended to retract the supporting structure (20) towards a use position (POS4) that is brought about in order to allow a person to sit on the supporting structure (20), the supporting structure (20) being able to rotate by 180 degrees about the elevation axis (AX5) from a first position (POS1) towards a second position (POS2) at least when the arms (32) are in use positions (POS4) thereof.

2. Jump seat according to claim 1, **characterised in that** the supporting structure (20) can be rotated by 90 degrees about the elevation axis (AX5) from the first position (POS1) towards an intermediate position, and by 90 degrees about the elevation axis (AX5) from the intermediate position towards the second position (POS2).

3. Jump seat according to either claim 1 or claim 2, **characterised in that** the mounting structure (30) has a length-adjustable cylinder (80) connected to at least one arm (32) for adjusting a height of the jump seat (10) with respect to a floor.

4. Jump seat according to any of claims 1 to 3, **characterised in that** the mounting structure (30) comprises a shock absorber (90) connected to at least one arm (32).

5. Jump seat according to any of claims 1 to 4, **characterised in that** the mounting structure (30) comprises a locking system (75) that can be controlled by a human for securing the arms (32) at least in the storage position (POS3) on request.

6. Jump seat according to any of claims 1 to 5, **characterised in that** the hinge (35) of a mounting assembly (31) allows the arm (32) of said mounting assembly at least a degree of translational freedom along a transverse axis (AX3) intended to be parallel to the wall (3).

7. Jump seat according to either claim 1 or claim 2, **characterised in that** the hinge (35) of a mounting assembly allows the arm (32) of said mounting assembly at least a degree of freedom to rotate about a transverse axis (AX3) intended to be parallel to the wall (3).

8. Jump seat according to any of claims 1, 2 and 7, **characterised in that** the pivot arrangement (40) comprises a shaft (41) for each mounting assembly, each shaft (41) being rigidly connected to the supporting structure (20) and being connected to the corresponding arm (32) by means of a pin (42) allowing the shaft (41) only to rotate relative to the arm (32) about the elevation axis (AX5).

9. Jump seat according to claim 8, **characterised in that** a link (43) is rigidly connected to one of the shafts (41), a length-adjustable cylinder (80) and/or a shock absorber (90) being arranged between the link (43) and the supporting structure (20), each arm (32) being able to rotate about the stowage axis (AX2) from the storage position (POS3) towards the use position (POS4) and about a transverse axis (AX3) that is intended to be parallel to the wall (3).

10. Jump seat according to either claim 8 or claim 9, **characterised in that** at least one arm (32) supports a rotary latch (44), the supporting structure (20) comprising two slots (47, 48), the latch (44) having two fingers (45, 46) suitable for penetrating the two slots (47, 48), respectively, when the supporting structure (20) is in the first position (POS1) and the second position (POS2), respectively.

11. Jump seat according to any of claims 1 to 7, **characterised in that** the pivot arrangement (40) comprises a bar (50) that extends upwards along the elevation axis (AX5) and is hinged to each arm (32), the supporting structure (20) comprising a tube (51) that is arranged around the bar (50), the seat pan (21) being supported by the tube (51), the bar (50) comprising a first rotary locking means (52) that has dogs, the tube (51) comprising a second rotary locking means (53) that has dogs which interact with the first rotary locking means (52), a rotation of the tube (51) relative to the bar (50) about the elevation axis (AX5) causing the first locking means (52) to disengage from the second locking means (53) and then causing the first locking means (52) to re-engage in the second locking means (53).

12. Jump seat according to claim 11, **characterised in that** the supporting structure (20) comprises a headrest (23) that can rotate relative to the tube (51) from a vertical position (POSV) towards a horizontal position (POSH), the headrest (23) supporting a peg (60) that interacts with an abutment (61) which is rigidly connected to the bar (50), the peg (60) adjoining the abutment (61) when the headrest (23) is in the vertical position (POSV), the peg (60) being located under the abutment (61) with vertical clearance (62) between the abutment (61) and the peg (60) when the headrest (23) is in the horizontal position (POSH) so as to allow the tube (51) to rotate relative to the bar (50).

13. Jump seat according to claim 5, **characterised in that** the locking system (75) comprises an extendable assembly provided with two members (76, 77) that can move relative to one other, one of the two members (76) being hinged to one arm and the other member (77) being hinged to the other arm, at least one translationally movable securing means (78, 79) being arranged in an opening in the two members (76, 77) when the arms (32) are in the storage position in order to lock one member (76) relative to the other member (77).

14. Jump seat according to claim 13 and claim 3, **characterised in that** one of the members (77) is the length-adjustable cylinder.

15. Jump seat according to claim 13 and claim 4, **characterised in that** the shock absorber (90) is attached to one of the members (77) and to one of the arms (32).

16. Aircraft (1) provided with a wall (3), **characterised in that** the aircraft (1) comprises a jump seat (10) according to any of claims 1 to 15, the hinges (35) being supported by the wall (3).

17. Aircraft according to claim 16, **characterised in that** the aircraft (1) comprises an aisle (2) that extends longitudinally from the rear (AR) of the aircraft (1) towards the front (AV) of the aircraft (1), the wall (3) defining the aisle (2) transversely, at least in part, the first position (POS1) positioning a person so as to face the front (AV) of the aircraft (1) and the second position (POS2) positioning the person so as to face the rear (AR) of the aircraft (1).
